# EUROPEAN PATENT APPLICATION

(11) **EP 1 569 170 A1**
(43) Date of publication of application: **31.08.2005**
(21) Application number: 03777233.2
(22) Date of filing: 04.12.2003
(51) Int. Cl.: G06T 7/00

(54) **CHARACTERISTIC REGION EXTRACTION DEVICE, CHARACTERISTIC REGION EXTRACTION METHOD, AND CHARACTERISTIC REGION EXTRACTION PROGRAM**

(30) Priority: 05.12.2002 JP 2002353790
(71) Applicant: SEIKO EPSON CORPORATION, Tokyo 163-0811 (JP)
(72) Inventor: OUCHI, Makoto, Seiko Epson Corporation, Suwa-shi, Nagano 392-8502 (JP)
(74) Representative: Winter, Brandl,&Fürniss, Hübner Röss, Kaiser, Polte Partnerschaft Patent- und Rechtsanwaltskanzlei
(86) International application number: PCT/JP2003/015514
(87) International publication number: WO 2004/051575

(57) **Abstract**

The conventional image retrieving method is not satisfactory in accuracy of retrieval. There has been a demand for a general-purpose method capable of rapidly retrieving characteristic parts. The object is achieved by acquiring image data representing an image with pixels arranged in a dot matrix pattern, detecting the edge pixels of the image according to the image data, extracting the edge pixel as the characteristic point when a pattern formed by the detected edge pixels and their neighboring pixels is similar to a prescribed object to be extracted, and defining as the characteristic region the prescribed region in the image which has the extracted characteristic points in large number.

## Description

### Technical Field to which the Invention Belongs

The present invention relates to a device, method, and program for extracting a characteristic region.

### Related Background Art

It is often necessary to retrieve images (entirely or partly) photographed by a digital camera or to retrieve adjoining positions at which images are stitched together to form a panorama photograph. To meet this need, there have recently been proposed several methods for retrieving characteristic parts in an image. (See, for example, "Procedure for extracting characteristic points by DRA (Decremental Resampling Algorithm)" [on-line] searched November 20, 2002 at the following Internet URL. http://www.koshi-lab.sccs.chukyo-u.ac.jp/research/picasso/side/dra.html

### Disclosure of the Invention

The conventional image retrieving method mentioned above is not satisfactory in accuracy of retrieval. There has been a demand for a general-purpose method capable of rapidly retrieving characteristic parts. The method disclosed in the non-patent document mentioned above is intended to extract features by extracting an edge of an image, deleting edge pixels meeting specific conditions which depend on certain edge pixels and their neighboring edge pixels, and repeating the deletion until the number of re-sampling points is reached. This method requires a large amount of computation and is slow in processing speed. Moreover, this method is not generally applicable because it is based on the assumption that a set of edges forms a closed curve. In addition, this method is poor in accuracy of retrieval.

The present invention was completed to address the above-mentioned problems involved with the conventional technology. It is an object of the present invention to provide a device, method, and program for extracting a characteristic region, which are intended to extract a characteristic region rapidly and accurately in general-purpose use.

The present invention achieves the above-mentioned object by extracting an edge in an image, judging whether or not its shape coincides with the shape of the object to be extracted, and defining the coinciding part as the characteristic region. Therefore, the device according to the present invention has an image data acquiring means and an edge pixel detecting means, so that the former acquires image data and the latter detects edge pixels in the image. Moreover, the device according to the present invention has a characteristic point extracting means and a characteristic region defining means, so that the former judges whether or not the detected edge pixels and their neighboring pixels are similar to a prescribed pattern to be extracted.

In this way, the edge pixels of the part whose edge shape is similar to the prescribed pattern are extracted as the characteristic point. The edge pixels extracted as the characteristic point become the candidate for the characteristic region. The characteristic region defining means defines the prescribed region having many characteristic points as the characteristic region. This characteristic region is a very characteristic region which contains many characteristic points that form the prescribed pattern to be extracted. In general, pixels constituting photographic images are complicated and they form various edges. However, it is possible to easily specify a very characteristic region in an image and extract it by noting that edges contain many characteristic points.

To be concrete, since a characteristic point similar to the pattern to be extracted is extracted, there are usually more than one candidate for the characteristic point. However, the regions containing these characteristic points are very limited. Consequently, if the region having many characteristic points in the image is defined as the characteristic region, then it is possible to restrict the candidate to become the characteristic region from the image even though the image microscopically contains many objects to be extracted. Thus, it is possible to easily extract the characteristic part from the limited candidates. This constitution permits highly accurate image retrieval and image matching with very few errors.

In other words, the characteristic region to be appropriately extracted contains the prescribed pattern to be extracted and hence the characteristic points in this region are certainly extracted simply by judging whether or not the neighbor of the edge pixels coincides with the pattern. However, simple judgment on coincidence with the pattern may lead to extraction of the part which forms by chance the pixels similar to the pattern but is not the characteristic region. This results in extraction with many errors, particularly in the case of complex pixels forming an image of natural photograph.

According to the present invention, the foregoing problem is addressed as follows. When the pattern formed by edge pixels and their neighboring pixels are similar to the pattern to be extracted, the edge pixels are regarded as the characteristic point and the extracted region having many characteristic points is regarded as the characteristic region. This characteristic region is the part which contains many objects to be extracted. It is a very unique region in a natural photograph or the like, and hence there are very few possibilities of similar regions existing in the same image. Thus, this characteristic region can be extracted with a very high degree of accuracy.

Particularly, when a specific region is searched for in a portion of an image (as in the case of retrieving those parts coinciding with each other in the ends of two images to be stitched together into a panorama photograph), there is almost no possibility that such characteristic regions exist in large number in each of the images to be stitched together. However, if two images are stitched together, a characteristic region should exist almost certainly in one part of each image. Therefore, extraction of a characteristic region according to the present invention makes it possible to retrieve the stitching parts from the two images with a very high probability. In other words, it is possible to extract the characteristic region very accurately. Image retrieval with higher accuracy will be possible by imposing constraints, such as selecting the characteristic region from one part each in the right and left ends of images to be stitched together in which the number of characteristic points is maximum.

Also, according to the present invention, detection of edge pixels permits extraction of characteristic points as candidates in the characteristic region. In this case, the number of characteristic points in the entire image is very small even in a natural image in which each edge has a comparatively large number of pixels. Moreover, after the characteristic points have been extracted, their number can be used as an index to determine the characteristic region. In this way it is possible to extract the characteristic region by inspecting a much less number of objects than the pattern matching in which a prescribed pattern is extracted by sequentially comparing pixels in an image. This leads to a high-speed processing. Moreover, as compared with the above-mentioned conventional process which requires various processes to compute as many edge pixels as the number of re-sampling points, the method of the present invention can extract the characteristic region with a much less number of steps. This permits a high speed processing.

Detection of edge pixels is accomplished in various ways in general use. Extraction of the characteristic point only needs comparison of the data obtained by edge detection with the prescribed object to be extracted. This method is applicable to any kind of image data irrespective of images and edge pixels. The fact that the characteristic region is determined by the number of characteristic points permits the method to be applied to any image data irrespective of images and edge pixels. Therefore, the method of the present invention does not assume that edge pixels connected together should form a closed curve, unlike the conventional one mentioned above; it is a general-purpose method that can be applied to images of any kind.

Incidentally, the means to detect edge pixels is not specifically restricted so long as it is capable of detecting edge pixels in the image data. It includes such filters as Sobel filter, Previtt filter, Roberts filter, and Laplacian filter. They are designed to compute the gradient of gray level of certain pixels and determines that such pixels constitute an edge by judging whether or not the computed gradient exceeds a prescribed threshold. The threshold may be adequately adjusted according to the gradient of pixels to be detected as an edge. No restrictions are imposed on the color of the image data to be detected. For an image in which each color is represented by its gray level, edges may be detected for each color. Alternatively, it is possible to compute the luminance of each pixel and then detect the edge having the computed luminance.

The means to extract characteristic points should be able to judge whether or not the pattern formed by edge pixels and their neighboring pixels is similar to the prescribed object to be extracted. For simple and rapid processing, this means should preferably be so constituted as to make judgment by assigning "1" to the edge pixels and "0" to the non-edge pixels, because pixels adjacent to edge pixels are either edge pixels or non-edge pixels.

In addition, for simple and rapid processing, it is desirable to get ready a predetermined pattern as the prescribed pattern to be extracted, and it is also desirable to store a filter of dot-matrix type. (This filter forms a pattern for extraction with a filter value to indicate edge pixels and a filter value to indicate non-edge pixels.) The stored filter permits easy comparison between the edge detecting data (in which "1" is assigned to edge pixels and "0" is assigned to non-edge pixels) and the prescribed pattern to be extracted. Comparison may be accomplished in various ways, e.g., by superposing the filter on the edge detecting data and performing AND operation on the filter value and the value (1 or 0) indicating the edge pixels or non-edge pixels.

The comparison should be able to judge whether or not the pattern formed by edge detecting data is similar to the prescribed pattern to be extracted. Comparison may be made by judging whether or not the number of coincidences between the filter value and the edge detecting data is larger than a prescribed number. A typical method may be as follows. If a coincidence between the edge pixels of the edge detecting data and the filter value to indicate the edge pixels exists at two or more places around the edge pixel at the filter center, then the edge pixel at the filter center is regarded as the characteristic point. The condition of "more than two places" is a mere example; it may be changed to adjust the processing speed according to the desired accuracy of extraction and the number of characteristic points.

It is possible to variously change the prescribed pattern to be extracted which is set up when the characteristic points are extracted. It is only necessary to distinguish one region and another if a certain region in one image contains many patterns to be extracted, and to characterize the region for discrimination and extract the characterized region as the characteristic region. A pattern meeting this requirement is one which has edges forming an angle larger than 90° and smaller than 180°. In other words, it is difficult to characterize a featureless part (such as sky or single-color wall) in an image.

In order to characterize an image, it is desirable to extract a part with characteristic edges (in a natural image) rather than a part with featureless edges. A part with edges forming many angles should be extracted as the characteristic part in an image. The angle between two edges should be larger than 90° and smaller than 180°, because an actual image rarely has two edges forming an angle of 90° and two edges forming an angle of 180° are straight and meaningless. Moreover, two edges forming an angle of 0° to 90° should be excluded because they are accompanied by many noises. The present inventors found that many angles are detected from many images if the pattern for extraction has an angle of 135°.

Filters of varied size will be available that form the pattern to be extracted. They include that of 3x3 pixels or 5x5 pixels, for example. A plurality of filters differing in pattern may be prepared previously. A desirable filter for high-speed accurate processing is a 3x3 pixel filter in which adjoining four pixels are assigned to the filter value for edge pixels and another adjoining four pixels are assigned to the filter value for non-edge pixels.

The 3×3 pixel filter is small but enough to represent a pattern with a certain area, and hence it permits comparison with a few steps. If it is assumed that the central pixel of the filter represents an edge and the adjacent four pixels represent edge pixels, then the three edge pixels (with none of them at the center) and the two edge pixels (with one of them at the center) form an angle of 135°. This pattern with only 3x3 pixels forms any angle from 90° to 180° and permits extraction of many characteristic points. This contributes to high-speed accurate processing.

The means to define a characteristic region is only required to be able to define as the characteristic region the prescribed region in the image which has the extracted characteristic points in large number. Such a characteristic region defining means may be realized by previously establishing the size (the number of horizontal and vertical pixels) of the characteristic region, assigning the region of this size to the region having the characteristic points in large number, and defining as the characteristic region the region which has the maximum number of characteristic points.

The region to be defined as the characteristic region may be established by dividing the image into two or more regions each composed of a prescribed number of pixels and selecting a specific region in which the number of characteristic points exceeds a prescribed threshold value. In this case, it is further possible to select a limited region from the region having a large number of characteristic points. This is accomplished by, for example, computing the average value of the edge gradient of pixels contained in each region and defining the region with a high average value as the characteristic region. This process involves the summing up of the edge gradient for individual pixels in the region; however, this process can be accomplished faster than the process to be performed on all images, because the region consists of regions in limited number selected from all images.

The present invention is also applied to the retrieval of positions for stitching two or more images to produce a panorama photograph. A practical way for retrieval may be by extracting a characteristic region from at least one image out of two or more images and judging whether or not the other image has a region similar to that characteristic region. To achieve this object, the image data acquiring means acquires the first and second image data, and the edge pixel detecting means and the characteristic region extracting means act on either or both of these images.

The characteristic region defining means acts on the first image so as to extract the characteristic region in the first image. Then, it compares the pixels in the characteristic region with the pixels in the second image so as to extract from the second image the region which coincides with the characteristic region in the first image. Since it is expected that the image of the extracted region is approximately identical with the image of the characteristic region, comparison accomplished in this way makes it possible to extract those parts which can be superposed easily and certainly from two or more images containing superposable parts (such as identical objects).

It is only necessary for the edge pixel extracting means and the characteristic point extracting means to be able to extract the characteristic region from the first image and to extract the part coinciding with the characteristic region from the second image. Extracting the characteristic region from the first image implies that the object on which these means act is the first image. Of course, these means may act on the second image when it is necessary to reference the characteristic point in the second image at the time of referencing or when it is necessary to use the characteristic region in the second image.

It is only necessary for the region comparing means to be able to compare the pixels in the characteristic region with the pixels in the second image. In other words, what is needed is to able to extract a region in the second image which is composed of pixels resembling pixels in the characteristic region by comparing these pixels with each other. This object may be achieved in various ways. For example, comparison of pixels will suffice if it is able to judge whether or not pixels in the first image are similar to pixels in the second image. Such judgment may be accomplished by comparing pixels in terms of gray level, because a small difference in gray level suggests similarity between the two images.

Various indexes may be used to judge that a difference in gray level is small. For example, if it is desirable to extract from the second image two or more region candidates coinciding with the characteristic region in the first image, then this object is achieved by judging whether or not the difference in gray level is lower than a prescribed threshold value. If it is desirable to extract from the second image a region which is most similar to the characteristic region in the first image, then this object is achieved by extracting the region in which the difference in gray level is minimal. Of course, gray level of different kind can be used to compare pixels. For example, in the case where the color of each pixel is represented by the gray level of each color component, then it is possible to use the gray level of each color component or the gray level indicating the color value (luminance, color saturation, and hue) of each pixel.

Practical comparison may be accomplished by extracting a region for comparison which has the same size as the characteristic region in the second image and comparing pixels in the region for comparison with pixels in the characteristic region. Here, "region of the same size" means that the region has approximately the same number of pixels. Of course, it is necessary that the two images have the same scale so that they are to be compared with each other. Two or more photographs taken under the same condition do not need enlargement or reduction. Otherwise, at least one of photographs differing in scale should be enlarged and reduced.

Assuming that the characteristic region and the region for comparison are of the same size, it will be possible to evaluate similarity between them by computing the difference in gray level between each pixel in the former and each pixel in the latter, which are at the corresponding position. Therefore, if a value is obtained by summing up these differences, then the resulting value permits object evaluation of similarity between the two regions. This value is referred as the comparison value. The smaller is the comparison value, the more similar are the two regions to each other.

The region comparing means may accomplish comparison by referencing the characteristic point. In this case, it compares pixels in one characteristic point with pixels in another characteristic pixels, thereby extracting the region coinciding with the characteristic region. Assuming that the pixels in the characteristic region constitute the characteristic point, it extracts the pixels and their neighboring pixels in the region for comparison which correspond to the position of the characteristic point. If these pixels constitute the characteristic point, the difference in gray level between this characteristic point and the characteristic point in the characteristic region is added to the comparison value mentioned above.

If the pixels in the characteristic region constitute the characteristic point, the region comparing means extracts the pixels and their neighboring pixels corresponding to the position of the characteristic point in the region for comparison and judges whether or no these pixels constitute the characteristic point. If judgment is affirmative, then it computes the difference in gray level between the pixels constituting the characteristic point. Assuming that the smaller the comparison value, the higher the similarity between regions, it is possible to compute the comparison value responding to the result of comparison between the characteristic points by adding the magnitude of the difference between the characteristic points.

Incidentally, the summing up of the comparison values may be accomplished in such a way that no substantial contribution is made from other points than the characteristic point (which is achieved by omitting the summing up or by changing the comparison value except for that of the characteristic point into a large value, such as the maximum value of difference between gray levels), then it is possible to perform comparison based on the characteristic point alone. Also, by extracting not only the pixels corresponding to the position of the characteristic point in the region for comparison but also their neighboring pixels, it is possible to improve the reliability of the result of comparison. This is explained below. In the case where two different images are to be stitched together, the gray level is approximately the same for pixels at the corresponding position in the regions to be superposed. However, there will be an instance in which the correspondence of the position of pixels is not complete and there is a slight dislocation in terms of pixel unit.

For example, in the case of superposing pixels one on top of the other, there occurs relative displacement of pixels in two photographs of the same object on account of various effect such as lens aberration in the photographing apparatus. By extracting not only the pixels corresponding to the position of the characteristic point in the region for comparison but also their neighboring pixels, it is possible to certainly extract and compare the characteristic point in the region for comparison which correspond to the characteristic point in the characteristic region. Incidentally, extraction of the neighboring pixels of the pixels corresponding to the position of the characteristic point may be accomplished by previously establishing the pixels to be extracted (which may be, for example, 3x3 pixels, with their center being the pixel corresponding to the position of the characteristic point).

As mentioned above, the edge pixel extracting means and the characteristic point extracting means should act on the second image in order to reference the characteristic point in the second image. If the region comparing means can extract the region in the second image that coincides with the characteristic region, then it is able to stitch together the first and second images at correct positions by superposing the referenced regions.

The foregoing procedure may be modified as follows. The edge pixel extracting means and the characteristic point extracting means act on the second image and the characteristic point defining means extracts the characteristic region also in the second image, so that it performs comparison based on the characteristic region extracted from both the first and second images. The region comparing means compares the pixels of the extracted characteristic region in the first image with the pixels of the extracted regions in the second image and the pixels in the neighboring regions. In other words, since the superposing regions of the first and second images contain pixels which are almost identical in gray level, the characteristic regions which have been extracted by application of the same algorithm to the first and second images could possibly be the superposing regions.

Comparison that is performed on the extended region around the characteristic region extracted from the second image makes it possible to certainly extract the region in the second image which coincides with the characteristic region of the first image. Comparison in this manner is performed on the characteristic region extracted from the second image and its neighboring regions but not on the whole of the second image. It effectively limits the region to be compared, eliminates unnecessary comparison, and helps complete the processing of comparison rapidly. Of course, the above-mentioned procedure may be modified such that the neighboring regions of the characteristic region are restricted to those within N pixels (N = natural number) around the characteristic region.

Another possible modification may be such that the region comparing means extracts the region in the second image which coincides with the specific part of the first image (or the characteristic region in the second image) without extracting the characteristic region from the first image or performing the comparing process on each region. This modification may be practiced in such a way that the edge extracting means and the characteristic point extracting means act on the first and second images to extract the characteristic point.

That is, they create the arrangement pattern data indicating the arrangement pattern of the characteristic points in the first image and extract, based on this arrangement pattern data, the characteristic point approximately coinciding with the arrangement pattern from the second image, so that they can specify the parts of the first and second images which are to be superposed one on top of the other. There are many possible ways of judging whether or not the arrangement of the characteristic point in the second image approximately coincides with the arrangement pattern.

For example, they create the arrangement pattern according to the data that specify the relative position of the characteristic point and extract the characteristic points in the second image one by one and then judge whether or not the characteristic point exists at the same position as the relative position indicated by the arrangement pattern data with respect to each characteristic point. Of course, it is permissible to judge the presence or absence of not only the relative position indicated by the arrangement pattern in the second image but also its neighboring position.

There is also another possible modification, in which they not only judge the presence or absence of the characteristic point as indicated by the arrangement pattern in the second image but also compare the gray level of the pixel if the characteristic point exists. In any case, the above-mentioned modification makes it possible to extract the coinciding part in the first and second images without having to extract the characteristic region in the first image or perform comparison for each characteristic region. Needless to say, the characteristic region to be extracted from the second image is not limited to rectangular ones but it may be a region of any shape containing the characteristic point.

Incidentally, the characteristic region extracting device mentioned above may be used alone or as a built-in component in a certain device. The present invention may be embodied variously. The above-mentioned method for defining the charactering region according to the distribution of the extracted characteristic points is apparently based on the present invention. Therefore, the present invention may be embodied also as a method, as in Claims 16 and 18. The characteristic region extracting device may need a prescribed program to run it. In this case the present invention may be embodied as a program, as in Claims 17 and 19.

The concepts mentioned in Claims 2 to 15 may be applied to the above-mentioned method and program, as a matter of course. Any storage medium may be used to present the program; it includes, for example, magnetic recording media, magneto-optical recording media, and any recording media which will be developed in the future. The present invention may be embodied partly in the form software and partly in the form of hardware. The software may be partly recorded in a recording medium and read out when in need. In addition, the software may be in the form of primary or secondary duplicate.

### Brief Description of the Drawings

Fig. 1 is a block diagram of the computer system.
Fig. 2 is a block diagram showing the functions of the program to extract a characteristic region.
Fig. 3 is a diagram showing some examples of the pattern filter.
Fig. 4 is a process flowchart of the program to extract a characteristic region.
Fig. 5 is a diagram illustrating an example of operation.
Fig. 6 is a block diagram showing the functions of the characteristic region extracting/stitching program.
Fig. 7 is a process flowchart of the characteristic region stitching program.
Fig. 8 a flowchart showing the comparing/joining process.
Fig. 9 is a diagram illustrating an example of operation.
Fig. 10 is a diagram illustrating an example of operation in another embodiment.
Fig. 11 is a diagram illustrating an example of operation in another embodiment.
Fig. 12 is a flowchart showing the comparing/joining process in another embodiment.

### Description of Special Embodiment

The embodiments of the present invention will be described below in the following order.
(1) Constitution of the system hardware
(2) Constitution and processing of the characteristic region extracting program
(3) Example of the characteristic region extracting process
(4) Other embodiments
(5) Process for image stitching

### (1) Constitution of the system hardware

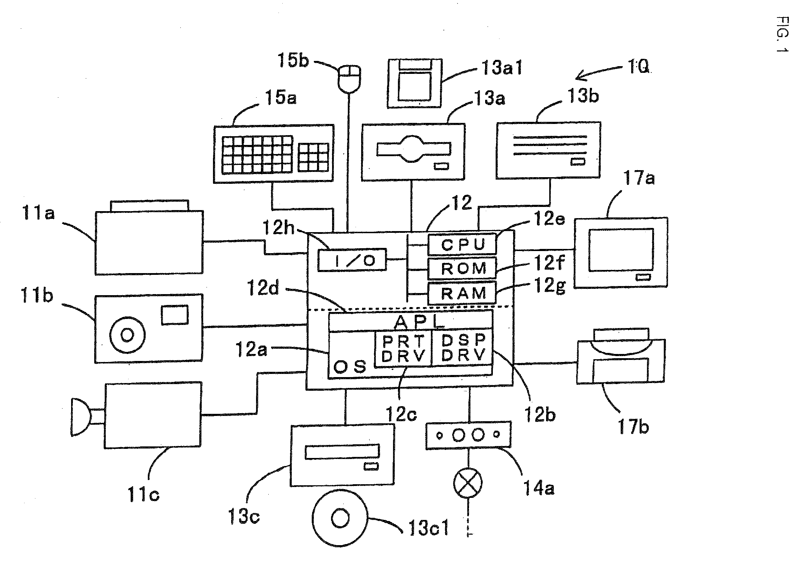

Fig. 1 is a block diagram showing the computer system to execute the characteristic region extracting program according to one embodiment of the present invention. The computer system 10 has a scanner 11a, a digital still camera 11b, and a video camera 11c, which are connected to the computer proper 12 so that they serve as image input devices. Each image input device generates image data representing an image with pixels arranged in a dot-matrix pattern, and it outputs the image data to the computer proper 12. The image data express each of the three primary colors (RGB) in 256 gray levels, so that they can express about 16,700,000 colors in total.

To the computer proper 12 are connected a flexible disk drive 13a, a hard disk 13b, and a CD-ROM drive 13c, which serve as external auxiliary storage devices. The hard disk 13b stores the main program for the system, and it reads programs and image data from the flexible disk 13a1 and the CD-ROM 13c1 when necessary.

To the computer proper 12 is also connected a modem 14a (as a communication device) for connection to the external network, so that it receives (by downloading) software and image data through the public communication circuit connected to the external network. This embodiment is designed such that access to outside is achieved through the modem 14a and the telephone line. The embodiment may be modified such that access to the network is achieved through a LAN adaptor or access to the external line is achieved through a router. In addition, the computer proper 12 has a keyboard 15a and a mouse 15b connected thereto for its operation.

The computer system 10 also includes a display 17a and a color printer 17b, which serve as image output devices. The display 17a has a display area consisting of 1024 pixels (in the horizontal direction) and 768 pixels (in the vertical direction). Each pixel is capable of displaying 16,700,000 colors as mentioned above. This resolution is a mere example; it may be changed to 640 x 480 pixels or 800 x 600 pixels.

The computer proper 12 executes prescribed programs to acquire images through the image input devices and display them on (or send them to) the image output devices. The programs include the operating system (OS) 12a as the basic program. The operating system 12a includes the display driver (DSPDRV) 12b (for displaying on the display 17a) and the printer driver (PRTDRV) 12c (for printing on the color printer 17b). These drivers 12b and 12c are dependent on the type of the display 17a and the color printer 17b. They may be added to or modified in the operating system 12a according to the type of equipment, so that the system performs additional functions (other than standard ones) inherent in specific equipment used. In other words, the system performs not only the standard processing defined by the operating system 12a but also a variety of additional functions available in the scope of the operating system 12a.

For execution of these programs, the computer proper 12 is equipped with CPU 12e, ROM 12f, RAM 12g, and I/O 12h. The CPU 12e for arithmetic operation executes the basic programs written in the RAM 12g while using the ROM 12f as a temporary work area, a setting memory area, or a program area. It also controls the internal and external devices connected through the I/O 12h.

The application (APL) 12d is executed on the operating system 12a as the basic program. It performs a variety of processes, such as monitoring the keyboard 15a and mouse 15b (as the devices for operation), controlling external devices and executing arithmetic operation in response to operation, and displaying the result of processing on the display 17a or sending the result of processing to the color printer 17b.

The color printer 17b prints characters and images with color dots on printing paper in response to the printer driver 12c according to print data produced by the application 12d. The characteristic region extracting program of the present invention may be available as the above-mentioned application 12d, as the printer driver 12c, as a scanner driver, or as a program to execute part of the functions of the application 12d. It should preferably be incorporated into a program to make panorama photographs or a program to retrieve images.

### (2) Constitution and processing of the characteristic region extracting program

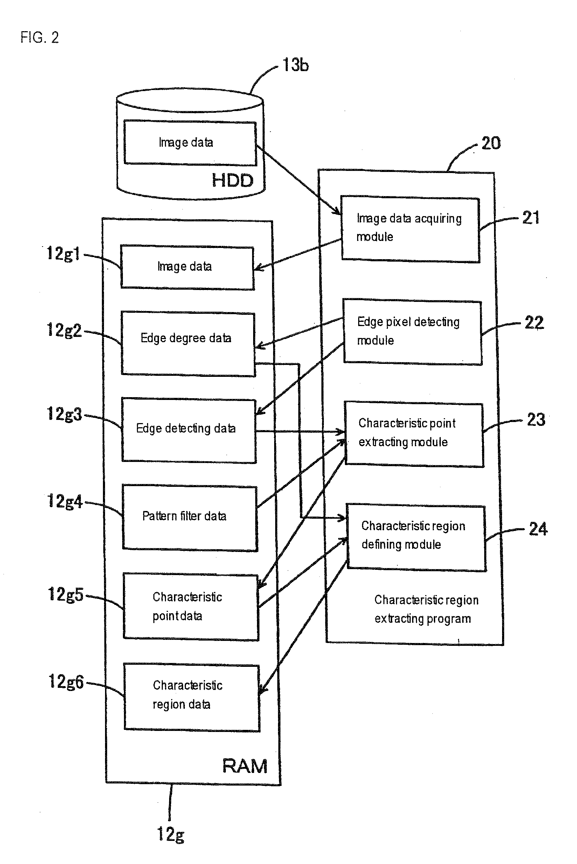

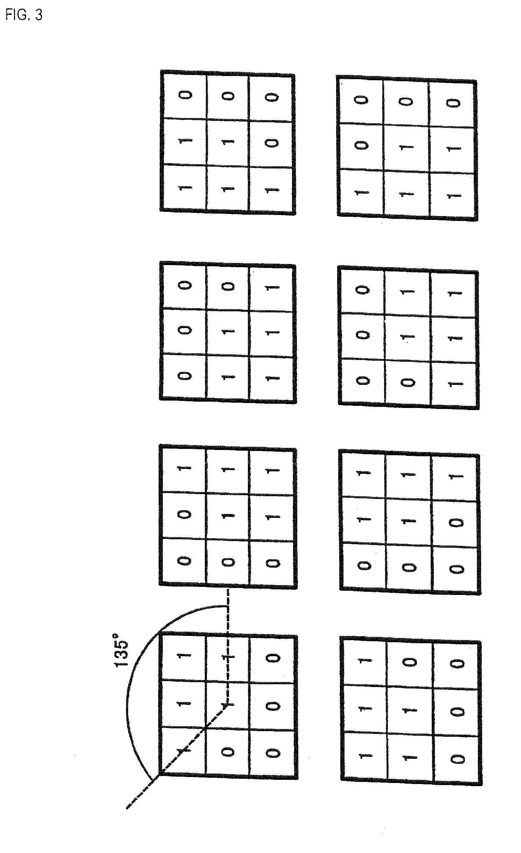

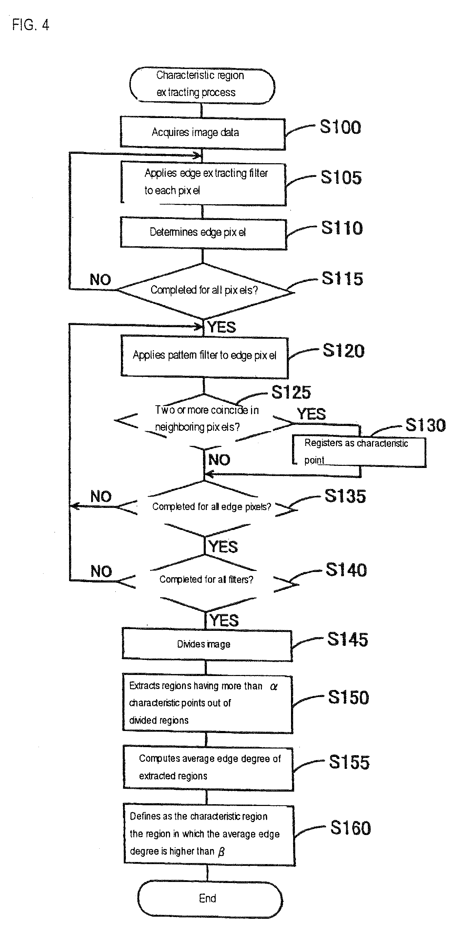

Fig. 2 is a block diagram showing the functions of the program to extract characteristic regions. It also shows data used in the processing. Fig. 3 is a diagram showing some examples of the pattern filter. Fig. 4 is a process flowchart of the program to extract characteristic regions. The functions and processing of the program will be explained with reference to these figures. As shown in Fig. 2, the characteristic region extracting program 20 consists of an image data acquiring module 21, an edge pixel detecting module 22, a characteristic point extracting module 23, and a characteristic region defining module 24.

It is assumed in Fig. 2 that the image data from which a characteristic region is to be extracted is stored in the hard disk 13b; however, the image data may be the one which is stored in any other media or acquired from the digital still camera 11b or through the modem 14a. The characteristic region extracting program 20 works as follows. In Step S100, the image data acquiring module 21 reads image data (12g1) from the hard disk 13b and stores it temporarily in the RAM 12g.

In Step S105, the edge pixel detecting module 22 applies a prescribed edge detecting filter to the individual pixels of the image data 12g1. The process in this step computes the edge gradient of the pixels, and the edge gradient data 12g2 thus computed is stored in the RAM 12g. The edge gradient can be computed by using a variety of edge detecting filters. The data obtained after filter application may be processed in various ways, including normalization. Whatever filter may be used, the edge gradient data 12g2 should have gray levels indicating the edge gradient at each pixel.

In Step S110, the edge pixel detecting module 22 determines whether or not each pixel is an edge by referencing the edge gradient data 12g2 which has been computed by the edge pixel detecting module 22 as mentioned above. In other words, the edge gradient of each pixel is compared with a previously established threshold value and the pixel whose edge gradient is larger than the threshold value is defined as the edge pixel. After the edge pixel has been defined, the edge detecting data 12g3 (which indicates whether or not each pixel is an edge pixel) is stored in the RAM 12g. The edge detecting data 12g3 represents each pixel with 2 bits, that is, "1" denotes that each pixel is an edge pixel and "0" denotes that each pixel is not an edge pixel.

In Step S115, a judgment is made as to whether or not the processing to determine whether or not pixels are edge pixels has been performed on all pixels in the image data 12g1 acquired as mentioned above. The procedure in Steps S105 and S110 is repeated until a judgment is made in Step S115 that the processing has been performed on all pixels. As the result, the edge gradient data 12g2 indicate the edge gradient for all pixels in the image data 12g1 and the edge detecting data 12g3 indicates whether or not pixels are edge pixels for all pixels in the image data 12g1.

In Steps S120 to S140, the characteristic point extracting module 23 applies the pattern filter data 12g4 to the edge detecting data 12g3, thereby extracting characteristic points from the edge pixels, and then stores the characteristic point data 12g5 (which represent the characteristic points) in the RAM 12g. The pattern filter data 12g4 is the filter data which represent a pattern formed by edge pixels and their neighboring pixels. It represents each of the 3x3 pixels by "1" or "0".

Fig. 3 shows some filters which the pattern filter data 12g4 (stored in the RAM 12g) represent in this embodiment. In these pattern filters, "1" represents the edge pixel and "0" represents the non-edge pixel. All of them have "1" at the center and consecutive four 1's or 0's in the neighboring eight pixels. Moreover, the pattern filter data 12g4 has eight sets of data for filters differing in the position of "1" or "0".

Each of the pattern filters shown in Fig. 3 has 1's and 0's arranged as follows. The middle line between the line of three 1's and the line of three 0's contains horizontally or vertically consecutive two 1's, and the diagonal line contains consecutive two 1's. Therefore, the line segments passing through each boundary between "1" and "0" form an angle of 135°. Thus, the 3x3 pattern filter in this embodiment extracts an angle of 135°.

In Step S120, the characteristic point extracting module 23 references the edge detecting data 12g3 and applies the pattern filter data 12g4 to the edge pixel. In other words, the edge pixel is superposed on the central pixel of the pattern filter shown in Fig. 3. In Step S125, the characteristic point extracting module 23 compares the edge detecting data 12g3 with the pattern filter data 12g4 in the eight neighboring pixels around the central pixel, so that it judges whether or not both sets of data have two or more pixels representing "1" at the same position. In other words, it judges whether or not the pattern filter is similar to the edge detecting data 12g3.

Since the pattern filter data 12g4 is applied to edge pixels, if both the edge detecting data 12g3 and the pattern filter data 12b4 have neighboring pixels two or more of which represent "1", then coincidence of pixel "1" should occur at three or more positions. In this embodiment, it is determined under this condition that the periphery of the edge pixel in the edge detecting data 12g3 resembles the pattern formed by the pattern filter. Therefore, the above-mentioned condition may be used to judge whether or not the edge formed by the edge detecting data 12g3 contains a pattern similar to an angle of 135°.

If it is judged in Step S125 that there are two or more coincidences of "1" in the periphery of the edge pixel, this edge pixel is registered as the characteristic point. The pixel which has been registered as the characteristic point functions as a flag "1" indicating that the registered pixel is the characteristic point. This data is stored as the characteristic point data 12g5 in the RAM 12g. The characteristic data 12g5 is only required to have a set of data indicating the position of the characteristic point and also indicating that the data represents the characteristic point. It may be a set of dot-matrix data, with "1" representing the characteristic point and "0" representing the non-characteristic point. Alternatively, it may be a set of data which indicates the coordinate of the characteristic point.

In Step S135, a judgment is made as to whether or not the pattern filter has been applied to all edge pixels in the edge detecting data 12g3. Until an affirmative result is obtained, Steps S120 to S130 are repeated for each pattern filter. Further, in Step S140, a judgment is made as to whether or not Steps S120 to S135 have been performed on all the pattern filters shown in Fig. 3. Until an affirmative result is obtained, Steps S120 to S135 are repeated. In this way there is obtained the characteristic point data 12g5 in which the edge pixels forming an angle of 135° represent the characteristic point which has been extracted.

In Steps S145 to S160, the characteristic region defining module 24 references the characteristic point data 12g5 and the edge gradient data 12g2, thereby extracting the characteristic region. This is accomplished as follows. In Step S145, it divides the image into several regions of prescribed size. In Step S150, it references the characteristic point data 12b5 and counts the number of characteristic points for each of the divided regions, and it extracts any region which has more than α characteristic points. (α is a previously established threshold value.)

In other words, it limits the number of regions having many characteristic points according to the discrimination based on the threshold value α, thereby narrowing down the candidates for characteristic regions. In Step S155, it further references the edge gradient data 12g2 and sums up the values of the edge gradient of pixels existing in each region which has been extracted in Step S150, thereby computing their average value. In Step S160, it defines the region having the average value larger than β as the characteristic region, and it stores in the RAM 12g the characteristic region data 12g6 which indicates the position of the characteristic region in the image. Here, β is a previously established threshold value.

### (3) Example of the characteristic region extracting process

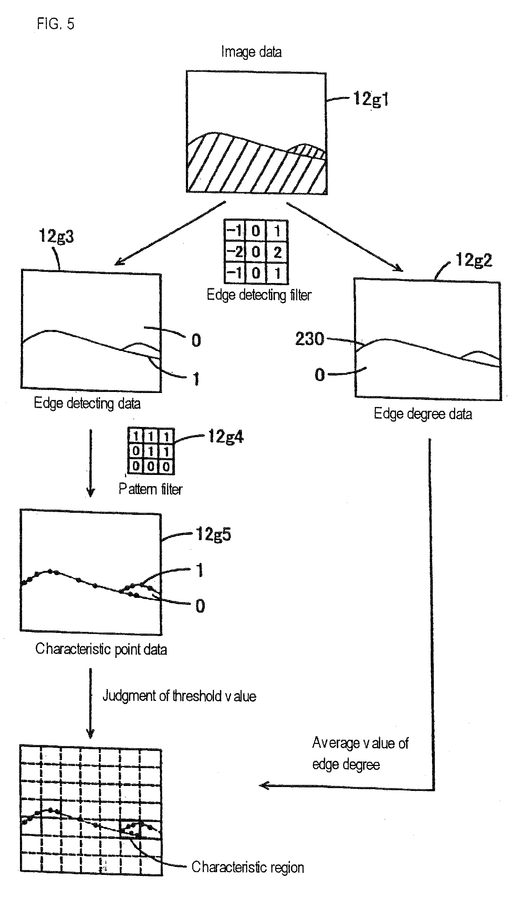

The following illustrates by example how the above-mentioned constitution and processing work. Fig. 5 is a diagram illustrating extraction of the characteristic region from the image data 12g1 of a photograph of mountains. The edge pixel detecting module 2 applies the edge detecting filter, thereby creating the edge gradient data 12g2 and the edge detecting data 12g3. Incidentally, the edge detecting filter shown in Fig. 5 is a Sobel filter; however, it may be replaced by any other filter.

Although both the edge gradient data 12g2 and the edge detecting data 12g3 represent the edge detected from the image data 12g1, the former has the gray level indicating the edge gradient for each pixel (of eight-bit data). As shown in Fig. 5, the edge pixel may have a gray level as large as 230 and the non-edge pixel may have a gray level as small as 0.

The characteristic point extracting module 23 references the edge detecting data 12g3 and applies the pattern filter data 12g4 to the edge pixel. This operation creates the characteristic point data 12g5, which is a set of dot-matrix data composed of "1" and "0" as shown in Fig. 5, with "1" representing the edge pixel whose neighboring pixels are similar to the pattern represented by the pattern filter, and "0" representing pixels excluding the characteristic points. Incidentally, in the characteristic point data 12g5, black points represent the characteristic points and broken lines represent the position corresponding to the edge. The foregoing procedure narrows down the candidates of the characteristic regions selected from the image data. In other words, the characteristic and differentiable part in the image is confined to the part where the characteristic point exists. So, it is only necessary to find out the really characteristic part from the confined part, and this eliminates the necessity of repeating the searching procedure many times.

The characteristic region defining module 24 divides the image into as many regions as necessary and extracts one region having more than α characteristic points, as shown at the bottom of Fig. 5, in which broken lines represent the divided regions and solid lines represent the regions to be extracted. In the example shown, the regions to be extracted have more than two characteristic points. In this embodiment, the characteristic region defining module 24 computes the average value of the edge gradient in each of the extracted regions, and it defines the region having an average value larger than β as the characteristic region. Incidentally, in Fig. 5, the region to be extracted as the characteristic region is indicated by thick solid lines.

As mentioned above, according to this embodiment, the procedure that is performed on all pixels is limited to edge detection, which is a simple operation with a filter consisting of a few pixels. Other procedures are performed on a very small portion of the image, such as edge pixels and characteristic points. Operation in this manner is very fast.

### (4) Other embodiments

The foregoing merely exemplifies the constitution and processing for extraction of the characteristic regions but does not exclude possible modifications. For example, although it is assumed in Fig. 5 that all data are pixel data arranged in a dot-matrix pattern, they may be replaced by data representing detected edges or coordinate for characteristic points. Such data save the amount of data. Any other data format may be adopted.

The foregoing embodiment, in which extraction of the characteristic region is accomplished by diving the image and counting the number of characteristic points in each of the divided regions, may be so modified as to extract those parts having many characteristic points from the characteristic point data 12g5 and define the extracted part as the characteristic region if it has a prescribed size. Moreover, the foregoing embodiment, in which the region having a large average value of edge gradient is defined as the characteristic region, may be modified such that the region having many characteristic points is defined as the characteristic region.

The foregoing embodiment, in which a threshold value of α is used to judge whether or not there are many characteristic points and a threshold value of β is used to judge whether or not the average value of edge gradient is large, may be so modified as to employ any other threshold values. In addition, judgment by means of the threshold value may be replaced by judgment by means of the number of characteristic points or the maximum average value of edge gradients or the upper three values of edge gradients. The former procedure permits extraction of one most characteristic point and the latter procedure permits extraction of more than one characteristic point.

In addition, the procedure of applying the pattering filter to the edge pixels and judging whether or not the prescribed pattern to be extracted is formed may also be variously modified. For example, it may be modified such that the value of the pattern filter to be compared is not only "1" but also "0". Modification in this manner adjusts the accuracy of extraction of the desired object.

The present invention may be used in various situations. For example, the characteristic region extracting program of the present invention may be applied to two images to be stitched together to make a panorama photograph. In this case, it is necessary to specify two regions (one each from two images) which coincide with each other. The program facilitates extracting such regions and specifying the position for stitching.

It will be possible to improve the accuracy with which the coinciding regions are specified, if the above-mentioned threshold value is adjusted such that more than one characteristic region are extracted or by imposing the condition that the characteristic region at the left side of one image should coincide with the one at the right side of another image. Another condition may be established by comparing the characteristic regions selected from the two images in terms of the number of characteristic points or the average value of edge gradient and then defining two regions having the most similar values as the coinciding regions.

The present invention may also be applied to image retrieval. Retrieving an image containing a part coinciding with or similar to a part of an original image is accomplished by counting the number of characteristic points in the original image and computing the average value of edge gradient in the original image and then extracting the characteristic region for the image to be retrieved. The thus obtained characteristic region also undergoes the counting of the characteristic points and the computation of the average value of edge gradient. Then the characteristic region is compared with the original image in terms of the number of characteristic points and the average value of edge gradient. If there exists a characteristic region, in which the number of characteristic points and the average value of edge gradient coincide, then the image containing such a characteristic region may be regarded as the retrieved image. If there exists a characteristic region, in which these values are similar, then the image containing such a characteristic region may be regarded as the similar image.

### (5) Process for image stitching

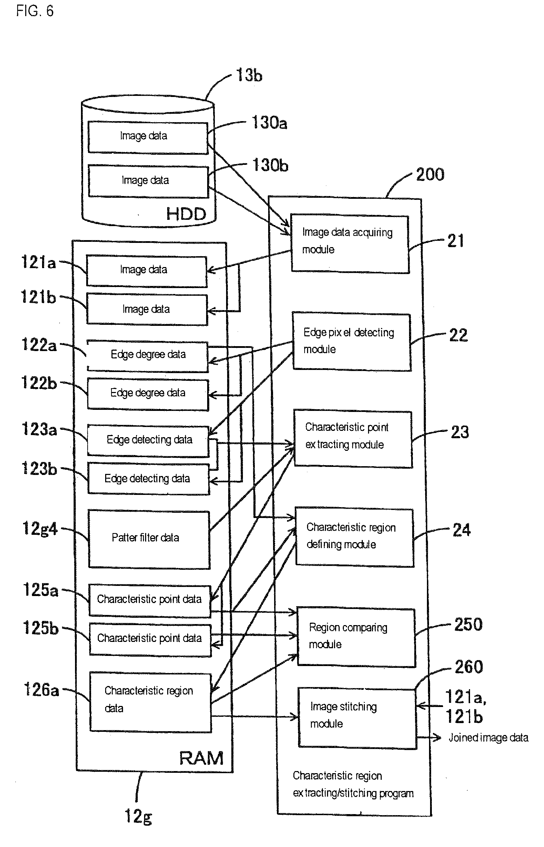

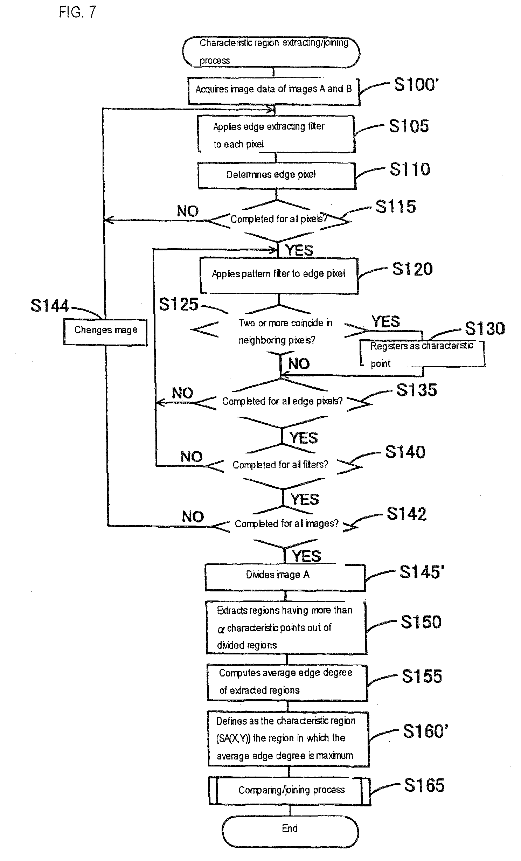

The following is concerned with the procedure for stitching two or more images together. Fig. 6 is a block diagram showing the functions of the characteristic region extracting/stitching program 200 which is intended to extract the characteristic regions and then stitching two images together. It also shows the data used in the execution of the program. Fig. 7 is a process flowchart of the characteristic region extracting/stitching program. Reference to these figures will be made in following description about the function and processing of the program. Incidentally, the characteristic extracting/stitching program 200 has many in common with the characteristic region extracting program 20 mentioned above. Such common parts in the constitution and procedure are indicated by the same symbols as used in Figs. 2 and 4, and their explanation is partly omitted from the following description.

The characteristic region extracting/stitching program 200 is comprised of the image data acquiring module 21, the edge pixel detecting module 22, the characteristic point extracting module 23, and the characteristic region defining module 24, as in the case of Fig. 2. It is further comprised of the region comparing module 250 and the image stitching module 260. For image stitching, the image data 130a and the image data 130b are stored in the hard disk 13b. The images represented by the image data 130a and 130b will be referred to as image A and image B, respectively. Image A and image B in this embodiment correspond respectively to the first image and the second image in the embodiment mentioned above.

The image data acquiring module 21, the edge pixel detecting module 22, the characteristic point extracting module 23, and the characteristic region defining module 24 perform the same processing as those of the characteristic region extracting program 20 shown in Fig. 2. The only difference is that their processing is performed on two sets of image data. In other words, the image data acquiring module 21 works in Step S100' to read the image data 130a and 130b from the hard disk 13b and temporarily store them in the RAM 12g. (The stored image data are indicated by 121a and 12ab.)

Thus, there are two images to be processed. The edge detecting module 22 and the characteristic point extracting module 23 processes the image data 121a and 121b in Steps S105 to S142. The processing in Steps S105 to S140 is identical with that shown in Fig. 4. That is, in the first loop from Step S105 to S142, the edge pixel detecting module 22 detects the edge gradient of the image A according to the image data 121a and defines the detected result as the edge gradient data 122a and the edge detecting data 123a, and the characteristic point extracting module 23 extracts the characteristic point according to the edge detecting data 123a and the pattern filter data 12g4 and defines the extracted results as the characteristic point data 125a.

After the processing according to the image data 121a has been completed, the program judges in Step S142 that the processing of the image data 121b (image B) is not yet completed. Then, the program switches the object of processing to the image data 121b in Step S144 and repeats the process in Step S105. As the result, the edge pixel detecting module 22 creates the edge gradient data 122b and the edge detecting data 123b, and the characteristic point extracting module 23 creates the characteristic point data 125b.

In this embodiment, the program extracts the characteristic region only from the image A and searches for the region coinciding with this characteristic region in the image B. Therefore, the processing in Steps S145' to S160' is performed on the image A. In other words, in Step S145', the characteristic defining module 24 divides the image into several regions of prescribe size. In Step S150, it references the characteristic point data 125a mentioned above, thereby counting the number of characteristic points in each of the divided regions, and extracts the regions in which there are more than α characteristic points. In Step S155, it references the edge gradient data 122a mentioned above, thereby summing up the edge gradient of pixels existing in each of the regions extracted in Step S150, and it computes their average value.

In Step S160', the program defines the region in which the average value is larger than β as the characteristic region SA in the image A, and it stores in the RAM 12g the characteristic region data 126a which indicates the coordinate (SA(X,Y)) of the characteristic region in the image A. Incidentally, in this embodiment, no upper limits are imposed on the number of characteristic points extracted from the characteristic point data 125a and the threshold value α mentioned above; however, the number of characteristic points to be extracted may be adjusted to about 200 to 300 and the threshold value α may be adjusted to about 10 to 30 when natural images are stitched together. The former adjustment may be accomplished by adjusting the threshold value for adjustment on the edge pixel in Step S110. The coordinate SA(X,Y) is not specifically restricted so long as they specify four corners of a rectangle of prescribed size. Such a coordinate may be replaced by those which specify the diagonal line of the rectangle.

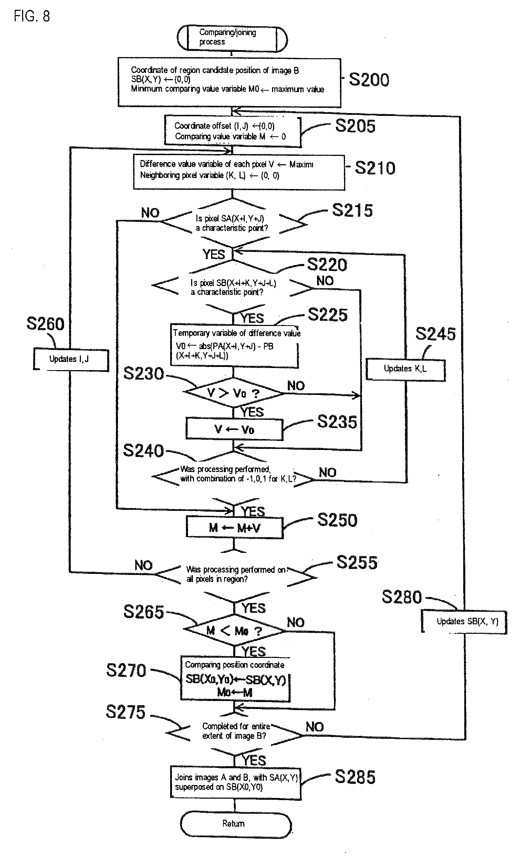

After completion of the characteristic region data 126a which indicates the characteristic region in the image A, the region comparing module 250 and the image stitching module 260 perform the procedure for comparison and stitching on the image A and image B, in Step S165. Fig. 8 is a flowchart showing the comparing/stitching process. The region comparing module 250 references the characteristic region data 126a and the characteristic point data 125a and 125b, thereby extracting the region, which coincides with the characteristic region SA, from the image B. It carries out the procedure in Steps S200 to S280.

In Step S200, the region comparing module 250 establishes the coordinate SB(X,Y) of the position of the region candidate as a variable so as to establish the region of the same size as the characteristic region SA as the region candidate SB in the image B, and initializes the coordinate to (0,0). It also establishes the minimum comparing value variable M0 to substitute the minimum value for comparison between the pixel in the characteristic region SA and the pixel in the region candidate SB, and then it initializes by substituting the maximum value that can be taken as the comparison value. Here, the comparison value is a value obtained by summing up the differences of the gray levels of individual pixels in the region. If the gray level is represented with 8 bits (in which case the gray level ranges from 0 to 255), the maximum comparing value is 256 multiplied by the number of pixels in the region.

In Step S205, the region comparing module 250 establishes the coordinate offset (I,J) as a variable to indicate the coordinate to specify the position of the pixel in the characteristic region SA and the position of the pixel in the region candidate SB, and then it initializes the value to (0,0). It also establishes the comparing value variable M to substitute the comparing value to be computed for each region, and it initializes the value to 0. In Step S210, it establishes the difference value variable V to substitute the difference value for each pixel when the pixel is compared, and it substitutes the maximum value to be taken as the difference value and initializes it. This difference value is a difference of the gray level of the pixel, and the maximum comparing value is 256 if the gray level is represented with 8 bits.

In this embodiment, the pixel in the region candidate SB to be compared with the specific pixel in the characteristic region SA is not restricted to the pixel at the position corresponding to the specific pixel but the neighboring pixels are also compared. So, in Step S210, the module establishes the neighboring pixel variable (K,L) to specify the neighboring pixels, and then it initializes the value to (0,0). In Step S215, the module references the characteristic point data 125a (which indicates the characteristic point of the image A) and the characteristic region data 126a, thereby judging whether or not the coordinate SA(X+I, Y+J) is the characteristic point.

If the module does not judge, in Step S215, that the coordinate SA(X+I, Y+J) is not the characteristic point, then it proceeds to Step S250 to update the comparing value variable M with the value which is obtained by adding the difference value variable V to the comparing value variable M. In other words, the module computes comparing value in such a way that the difference of the gray level of the pixel is not computed for the pixel which is not the characteristic point but it is added to the maximum value of the difference value variable V. If the module judges, in Step S215, that the coordinate SA(X+I, Y+J) is the characteristic point, then it proceeds to Step S220 to reference the characteristic point data 125b indicating the characteristic point of the image B, thereby judging whether or not the coordinate SA(X+I+K, Y+J+K) is the characteristic point.

If the module does not judge, in Step S220, that the coordinate SA(X+I+K, Y+J+K) is the characteristic point, then it proceeds to Step S240 in which it substitutes any of "-1, 0, 1" into the respective variables K and L and judges whether or not processing has been performed on all of the combinations. If the module does not judge, in Step S240, that the processing has been performed on all of the combinations, then it proceeds to Step S245 in which it changes the value of (K,L) by any of "-1, 0, 1" and repeats the processing after Step S220.

In other words, the module performs processing on all of the arbitrary combinations, with the value of (K,L) being "-1, 0, 1". Therefore, it performs the processing in Steps S220 to S235 on 3x3 pixels whose center is at the coordinate SB(X+I, Y+J). In addition, since it specifies the coordinate of the common angle (say, the upper left angle) of each region for any of the coordinate SA and the coordinate SB, the relative position of the coordinate SA(X+I, Y+J) with respect to the angle of the characteristic region SA coincides with the relative position of the coordinate SB(X+I, Y+J) with respect to the angle of the region candidate. Therefore, in this embodiment, the module makes judgment on not only the coordinate in the region candidate SB with respect to the characteristic point in the characteristic region SA but also the characteristic point including the pixels in the neighborhood of the coordinate.

If the module judges, in Step S220, that the coordinate SB(X+I+K, Y+J+K) is the characteristic point, then it computes abs(PA(X+I, Y+J) - PB(X+I+K, Y+J+L)) and substitutes it into the temporary variable V0 of the difference value. Here, abs denotes an absolute value, PA(X+I, Y+J) denotes the gray level of the pixel at the coordinate SA(X+I, Y+J), and PB(X+I+K, Y+J+L) denotes the gray level of the pixel at the coordinate SB(X+I+K, Y+J+K).

Incidentally, the gray level of each pixel may be represented by various values; for example, it may be represented by the gray level for each color component of each pixel, or it may be represented by color values (luminance, color saturation, and hue) for the color of each pixel. If the module judges, in Step S220, that the coordinate SB(X+I+K,Y+J+L) is the characteristic point, then it skips Steps S225 and S230 and makes judgment in Step S240.

In Step S230, the module judges whether or not the value of the temporary variable V0 of the difference value is smaller than the difference value variable V of each pixel mentioned above. If the module judges that the value of the temporary variable V0 of the difference value is smaller than the difference value variable V of each pixel mentioned above, then it proceeds to Step S235 in which it substitutes the value of the variable V0 into the variable V. If the module does not judge, in Step S235, that the value of the temporary variable V0 of the difference value is smaller than the difference value variable V of each pixel mentioned above, then it skips the step S235.

After the foregoing processing, the module makes judgment in Step S240. If it judges in Step S240 that the processing has been performed on all the combinations of (K,L) created by selecting any of "-1, 0, 1", then it proceeds to Step S250 in which it updates the comparing value variable M with the value obtained by adding the difference value variable V to the above-mentioned comparing value variable M. In the case where the processing in Steps S220 to S245 has been performed, the processing to update the variable V when the temporary variable V0 of the difference value is smaller than the difference value variable V is performed; therefore, it follows that the difference value variable V has been substituted by the minimum value among the difference values obtained by comparing with the above-mentioned 3x3 pixel.

In Step S255, the module judges whether or not the above-mentioned processing has been performed on all pixels in the region. In other words, it judges whether or not the processing has been performed by establishing all the combinations which are obtained by using an arbitrary value up to the prescribed upper limit value of I,J. If the module does not judge that the foregoing processing has been performed on all pixels in the region, then it proceeds to Step S260 in which it updates (I,J) and repeats the processing after Step S210.

The above-mentioned processing is not intended to compute the difference between the pixel in the region candidate SB and all the pixels in the characteristic region SA but is intended to compute the difference between the characteristic point in the characteristic region SA and the characteristic point in the region candidate SB and add the result to the comparing value variable M. If the characteristic point is not involved, the maximum value of the difference for each pixel is added to the comparing value variable M, as mentioned above. As the result of this processing, contribution from pixels which are not characteristic points becomes the same value (maximum value). Therefore, it follows that the smaller the value of the comparing value M which is eventually obtained, the smaller the difference in the gray level of the characteristic point.

In Step S265, the module judges whether or not the value of the comparing value variable M is smaller than the value of the minimum comparing value variable M0. If it judges that the value of the comparing value variable M is smaller than the value of the minimum comparing value variable M0, it regards the value of the variable M as the minimum value at that time and then updates the variable M0 with the variable M in Step S270. In this embodiment, the region candidate SB in which the comparing value is the minimum value is regarded as the region which coincides with he characteristic region SA. So, in Step S270, the module establishes the variable of the comparing position coordinate SB (X0, Y0) which indicates the region in the image B coinciding with the characteristic region SA, and it substitutes the value of the coordinate SB(X, Y) into the coordinate SB(X0, Y0).

If the module does not judge, in Step S265, that the value of the comparing value variable M is smaller than the value of the minimum comparing value variable M0, then it skips Step S270 by regarding the region candidate SB as not coinciding with the characteristic region SA. In Step S275, the module judges whether or not the processing has been completed over the entire range of the image B. In other words, it judges whether or not the coordinate SB(X, Y) of the region candidate position has been established for all the coordinates which would be possible in the image B. If the module judges, in Step S275, that the processing has been completed over the entire range of the image B, it proceeds to Step S280 in which it updates the coordinate SB(X,Y) and repeat the process after Step S205.

In the case where judgment in Step S275 shows that the processing has been completed over the entire range of the image B, the coordinate of the region which has become the minimum comparing value M as the result of comparison is SB(X0, Y0). Therefore, the region in the image B coinciding with the characteristic region SA is specified by the coordinate SB(X0, Y0) of its angle.

So, in Step S285, the image stitching module 260 receives the coordinate SB(X0, Y0), references the characteristic region data 126a, thereby acquiring the coordinate SA(X, Y), stitches the image data 121a and 12ab together such that the coordinate SA(X, Y) coincides with the coordinate SB(X0, Y0), and outputs the stitching image data. The foregoing processing makes it possible to stitch the image A and the image B together by accurately superposing those parts having the same content.

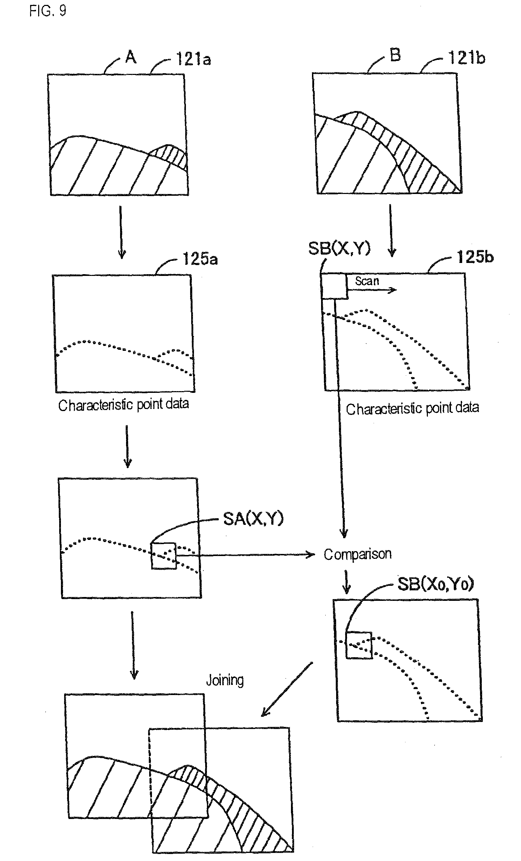

The following illustrates by example how the above-mentioned constitution and processing work. Fig. 9 is a diagram illustrating how to stitch the image A and the image B together at an appropriate position, both images being photographs of mountains. The image A is composed of a large mountain in the foreground and a summit of another mountain in the background. The image B is composed of the right side of a mountain in the foreground and the right side of another mountain in the background.

When the edge detecting module 22 and the characteristic point extracting module 23 processes the image data 121a and 121b representing these images, they detect several characteristic points along the ridgeline of the mountains. These characteristic points are represented by the characteristic point data 125a and 125b. These data represent the characteristic point with "1" and the non-characteristic data with "0" for pixels forming a dot matrix. Therefore, the data look like the schematic diagram shown in Fig. 9 (the second row).

The characteristic region defining module 24 extracts the characteristic region from the image A and determines the coordinate SA(X,Y) of the upper left corner of the characteristic region SA, as shown in Fig. 9 (the third row). The characteristic region defining module 24 also establishes the region candidate SB for the image B. The region comparing module 250 computes the comparing value M while changing the position of the region candidates SB (or scanning the region in the image B). When this scanning is completed, the region (the coordinate SB(X0, Y0)) which has been given the minimum comparing value M0 is the region which has the least difference between the gray levels of the pixels of the characteristic point as compared with the characteristic region SA.

Consequently, the image of the coordinate SB(X0, Y0) coincides with the image of the coordinate SA(X, Y), as shown in Fig. 9. Thus, the image stitching module 260 makes it possible to stitch the images A and B together by superposing the coordinates, thereby accurately superposing the two images one over another. In this embodiment, the module extracts the characteristic points from the image A and determines the characteristic region of the image A according to the characteristic points. This procedure permits easy and rapid extraction of the parts (as the basis for superposition) from the image A.

Moreover, in this embodiment, the difference between these characteristic points is computed for the image A and the image B. This obviates the necessity of computing the differences of all pixels for the images A and B and of trying the matching. This leads to rapid processing. The advantage of extracting edges and detecting characteristic points is that characteristic parts can be extracted easily and objectively from complex images and their comparison can be accomplished for image stitching based on these characteristic parts. This permits accurate and rapid processing.

The foregoing processing is a mere example which does not restrict the processing to specify the positions to be joined together in two or more images. It may be modified such that the object to be scanned by the region candidate SB is not the whole of the image B but a portion of the image B. To be concrete, the construction almost identical with that shown in Fig. 6 is feasible. However, the characteristic region defining module 24 extracts not only the characteristic region SA in the image A but also the characteristic region SB' in the image B. It is desirable to extract more than one region as the characteristic region SB'. This may be accomplished by adjusting the above-mentioned threshold value α to define it as the object for comparison and by defining the region, in which the average edge gradient has a value larger than the prescribed threshold value, as the characteristic region SB'.

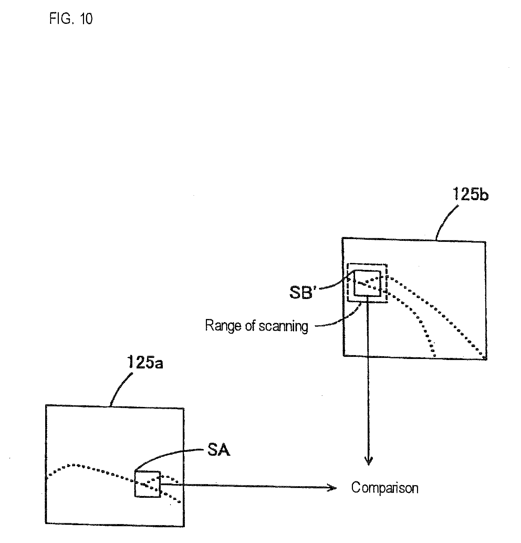

Fig. 10 is a diagram illustrating how this embodiment is applied to the images A and B shown in Fig. 9. That is, the characteristic region defining module 24 creates the characteristic point data 125a and 125b, as in the constitution shown in Fig. 6, and extracts the characteristic region SA and the characteristic region SB'. Comparison is accomplished by the procedure almost similar to that shown in Fig. 8; however, the object to be scanned as the region candidate SB is the characteristic region SB' and its neighboring regions. For example, the object for scanning is the area indicated by the broken line which surrounds the characteristic region SB' as shown in Fig. 10. In Step S280, comparison is accomplished by changing the coordinate in such a restricted region.

It is expected that if the algorithm to extract the characteristic region from the image A is employed, it will be possible to extract from the image B the region having the same feature as that characteristic region. Thus, if the same algorithm as used for the image A is applied also to the image B and the characteristic region is extracted from the image B, it will not be necessary to assign the image B entirely to the region candidate and hence it will be possible to complete the processing very fast.

In the case shown in Fig.10, the neighbor of the characteristic region SB' is also scanned, so that the part coinciding with the characteristic region SA is certainly extracted. The area of the neighbor of the characteristic region SB' may be properly adjusted according to certainty required. Scanning of the neighbor may be omitted in other cases.

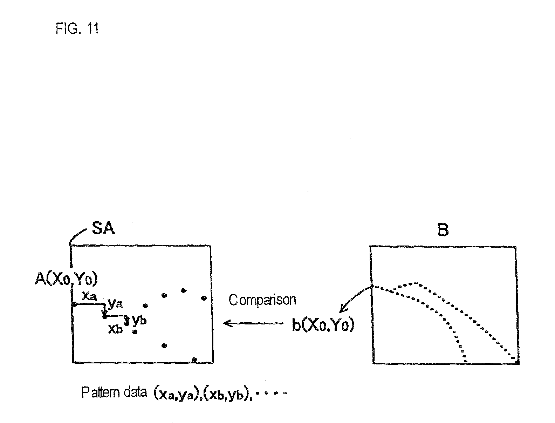

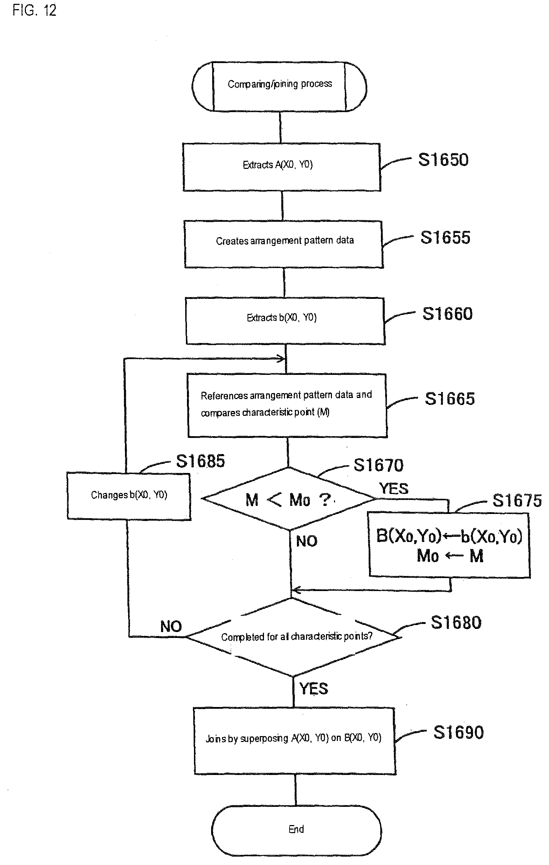

It is not essential to compare pixels in the region of specific shape (e.g., rectangle) as in the above-mentioned embodiment; however, modification is possible in which these parts which coincide with each other in the images A and B are detected by using the relative position of the characteristic points. An example of such modification applied to the images A and B (shown in Fig. 9) is illustrated in Fig. 11, and the modified embodiment is accomplished according to the flowchart shown in Fig. 12. This modified embodiment employs the same modules and data as shown in Fig. 6.

The modules shown in Fig. 6 compute the characteristic point data 125a and 125b for the images A and B, respectively, and also compute the characteristic region SA in the image A. An example of the characteristic region extracted from the image A is shown in the left of Fig. 11 (which is an enlarged view). Black dots in the enlarged view denote the characteristic points. In this modified embodiment, the region comparing module works differently from the region comparing module shown in Fig. 6. That is, it acquires the arrangement pattern of characteristic points in the characteristic region SA, thereby creating the arrangement pattern data, and extracts from the image B those parts conforming to this arrangement pattern.

Consequently, the region comparing module in this modified embodiment executes the processing shown in Fig. 12 in place of the processing shown in Fig. 8. In other words, it extracts a pixel which is a characteristic point in the characteristic region SA and is at the leftmost side, and then it assigns this pixel to the coordinate A(X0, Y0). (Step S1650) Then it creates the arrangement pattern data indicating the relative position of the coordinate A(X0, Y0) and other characteristic points. (Step S1655).

The relative position may be described by, for example, retrieving the characteristic points rightward from the coordinate A(X0, Y0) and specifying the respective numbers (xa) and (yb) of horizontal and vertical pixels existing between the first found characteristic point and the coordinate A(X0, Y0). It is possible to create the arrangement pattern by sequentially assigning (xa,ya), (xb,yb), ... to the number of horizontal and vertical pixels for the characteristic points which are found during moving rightward from the coordinate A(X0, Y0).

Needless to say, the mode of the arrangement pattern data is not limited to the one mentioned above. In any case, after the arrangement pattern has been created, it is compared with the characteristic point of the image B according to the arrangement pattern. In other words, it extracts one characteristic point from the characteristic point data 125b and substitute its coordinate into the coordinate b(X0, Y0). (Step S1660) Then, it references the arrangement pattern data mentioned above, thereby sequentially extracting the pixels which exist at the right side of the coordinate b(X0, Y0) and correspond to the position of the characteristic point in the characteristic region SA. In other words, it adds xa and ya respectively to the x coordinate and the y coordinate of the coordinate b(X0, Y0), thereby specifying the position of the pixel. It further adds xb and yb to these coordinates, thereby specifying the position of these pixels. And, it acquires the gray level of each pixel and compares it with the characteristic point in the image A. In other words, it computes the difference between the gray level of the pixel of each characteristic point in the image A and the gray level of the pixel which corresponds to each characteristic point and which has been extracted from the image B. It further adds up the difference values and assign the resulting sum to the comparing value M. (Step S1665)

After the comparing value M has been calculated, it judges whether or not it is smaller than the value of the variable M0 into which the minimum comparing value is to be substituted. (Step S1670) If it judges that the value of the comparison value M is smaller than the value of the variable M0, then it regards the value of the variable M as the minimum value at that time and updates the variable M0 with the value of the variable M. (Step S1675) Also, at this time, it substitutes the value of the coordinate b(X0, Y0) into the variable B(X0, Y0) into which the coordinate of the image B to be supposed on the coordinate A(X0, Y0) is to be substituted. Incidentally, in the initial stage of processing, the variable M0 is previously initialized with a sufficiently large value.

And, in Step S1680, it judges whether or not the processing has been completed, with the value of all characteristic points in the image B being assigned to the coordinate b(X0, Y0). It updates, in Step S1685, the coordinate b(X0, Y0) and repeats the processing after Step S1665, until it judges that the processing for all characteristic points is completed. The coordinate which is registered as the value of the coordinate B(X0, Y0) after the above-mentioned repeated processing is the coordinate in the image B, which is the coordinate to be superposed on the coordinate A(X0, Y0) of the image A. Therefore, the image stitching module performs the processing for stitching the images A and B together while superposing the coordinate A(X0, Y0) on the coordinate B(X0, Y0).

The above-mentioned processing makes it possible to stitch the images A and B together without forming a region of prescribed size in the image B and performing the processing for comparison of pixels in this region. Incidentally, in this embodiment, it is only necessary to extract a certain part having some kind of feature in the arrangement pattern from the image A and create the arrangement pattern data, and the processing for extracting the characteristic region from the image A is not always essential. Moreover, the forgoing embodiment is not always limited to stitching two images together. It may be applied to the situation in which the right and left sides of one image are joined to other two images, or the right and left sides and upper and lower sides of one image are joined to other four images.

### Industrial Applicability

As mentioned above, the present invention will provide a computer which realizes the function to retrieve characteristic parts in an image and the function to stitch two or more images together. Such functions are necessary to retrieve a image (or part thereof) taken by a digital camera and search for the position for joining to make a panorama photograph.

## Claims

1. A characteristic region extracting device which comprises
an image data acquiring means to acquire image data representing an image with pixels arranged in a dot matrix pattern,
an edge pixel detecting means to detect the edge pixels of the image according to the image data,
a characteristic point extracting means to extract the edge pixel as the characteristic point when a pattern formed by the detected edge pixels and their neighboring pixels is similar to a prescribed object to be extracted, and
a characteristic region defining means to define as the characteristic region the prescribed region in the image which has the extracted characteristic points in large number.

2. The characteristic region extracting device according to Claim 1, wherein the characteristic point extracting means is a dot-matrix filter formed with the filter value indicating the edge pixel and the filter value indicating the non-edge pixel, so that it compares more than one filter forming a pattern by the arrangement of each filter value with the edge detecting data after detection of the edge pixel and determines whether or not the pixel corresponding to the center of the filter is the characteristic point.

3. The characteristic region extracting device according to Claim 2, wherein the filter is applied to each edge pixel at the time of comparing and the edge element to which the filter has been applied is defined as the characteristic point when the filter value indicating the edge pixel coincides with the edge pixel of the edge detecting data at more than two places.

4. The characteristic region extracting device according to any of Claims 1 to 3, wherein the pattern to be extracted is a pattern in which the edges form an angle larger 90° and smaller than 180°.

5. The characteristic region extracting device according to any of Claims 1 to 3, wherein the filter is a filter of 3x3 pixels, with adjoining four pixels (excluding the center) being the filter value indicating the edge pixel and other adjoining four pixels being a filter value indicating the non-edge pixels.

6. The characteristic region extracting device according to any of Claims 1 to 5, wherein the characteristic region defining means divides the image into two or more regions having a prescribed number of pixels and defines as the characteristic region the region in which the number of characteristic points exceeds a specific threshold value.

7. The characteristic region extracting device according to Claim 6, wherein the characteristic region defining means computes the average value of the edge gradient of pixels contained in each the two or more regions and defines as the characteristic region the region in which the average value is high.

8. The characteristic region extracting device according to any of Claims 1 to 7, wherein the image data acquiring means acquires the first image data indicating the first image and the second image data indicating the second image, and the characteristic region defining means defines the characteristic region in the first image, and which further comprises a region comparing means to compare the pixel in the characteristic region with the pixel in the second image.

9. The characteristic region extracting device according to Claim 8, wherein the region comparing means compares the gray level of the pixel in the characteristic region with the gray level of the pixel in the second image and extracts the region in the second image in which the difference between two is small.

10. The characteristic region extracting device according to Claim 9, wherein the region comparing means extracts the region for comparison which has the same size as the characteristic region in the second image and adds up the differences between the gray level of the pixel in the extracted region for comparison and the gray level of the pixel in the characteristic region, thereby defining the resulting summed value as the comparing value of the extracted region, and extracts the region in which the comparing value is small.

11. The characteristic region extracting device according to Claim 10, wherein, when the pixel in the characteristic region is the characteristic point, the region comparing means extracts the pixel and its neighboring pixels which corresponds to the position of the characteristic point in the region for comparison, and, when these pixels are the characteristic points, adds the magnitude of difference between the gray level thereof and the gray level of the characteristic point in the characteristic region to the comparing value.

12. The characteristic region extracting device according to any of Claims 8 to 11, which further comprises a stitched image data creating means to create the stitched image data which represents the stitched image formed by stitching together the first image and the second image by superposing the region in the second image which has been extracted by comparison by the region comparing means on the characteristic region.

13. The characteristic region extracting device according to any of Claims 1 to 7, wherein the image data acquiring means acquires the first image data representing the first image and the second image data representing the second image, and the characteristic region defining means defines the characteristic region for the first image and the second image respectively, and which further comprises a region comparing means to compare the pixel in the characteristic region extracted in the first image with the pixel in the characteristic region and its neighboring regions extracted from the second image.

14. A characteristic region extracting device which comprises
an image data acquiring means to acquire the first image data representing the first image and the second image data representing the second image, said image data representing an image with pixels arranged in a dot matrix pattern,
an edge pixel detecting means to detect the edge pixels of the image according to the first image data and the second image data,
a characteristic point extracting means to extract the characteristic point in the first image and the characteristic point in the second image when a pattern formed by the detected edge pixels and their neighboring pixels is similar to a prescribed object to be extracted,
an arrangement pattern data creating means to create the arrangement pattern data which indicates the arrangement pattern based on the extracted characteristic point in the first image, and
a characteristic region defining means to reference the thus created arrangement pattern data and define as the characteristic region the region in which the characteristic point in the second image approximately coincides with the arrangement pattern.

15. The characteristic region extracting device according to Claim 14, wherein the arrangement pattern data is the data which specifies the relative position of the characteristic point.

16. A characteristic region extracting method which comprises an image data acquiring step to acquire the image data representing a first image with pixels arranged in a dot matrix pattern, an edge pixel detecting step to detect the edge pixels of the image according to the image data, a characteristic point extracting step to extract the edge pixel as the characteristic point when the pattern formed by the detected edge pixels and their neighboring pixels is similar to a prescribed object to be extracted, and a characteristic region defining means to define as the characteristic region the prescribed region in the image which has the extracted characteristic points in large number.

17. A characteristic region extracting program which temporarily stores image data representing an image in a prescribed storage medium and extract a characteristic region from the image, said program allowing a computer to realize
an edge pixel detecting function to detect the edge pixels of the image according to the image data stored in the storage medium,
a characteristic point extracting function to extract the edge pixel as the characteristic point when the pattern formed by the detected edge pixels and their neighboring pixels is similar to a prescribed object to be extracted, and
a characteristic region defining function to define as the characteristic region the prescribed region in the image which has the extracted characteristic points in large number.

18. A characteristic region extracting method which comprises
an image data acquiring step to acquire the first image data representing the first image and the second image data representing the second image, said image data representing an image with pixels arranged in a dot matrix pattern,
an edge pixel detecting step to detect the edge pixels of the image according to the first image data and the second image data,
a characteristic point extracting step to extract the characteristic point in the first image and the characteristic point in the second image when a pattern formed by the detected edge pixels and their neighboring pixels is similar to a prescribed object to be extracted,
an arrangement pattern data creating step to create the arrangement pattern data which indicates the arrangement pattern based on the extracted characteristic point in the first image, and
a characteristic region defining step to reference the thus created arrangement pattern data and define as the characteristic region the region in which the characteristic point in the second image approximately coincides with the arrangement pattern.

19. A characteristic region extracting program which temporarily stores in a prescribed storage medium the first image data representing the first image and the second image data representing the second image and extracts a characteristic region from the second image which can be superposed on part of the first image, said program allowing a computer to realize
an edge pixel detecting function to detect the edge pixels of the image according to the first image data and the second image data stored in the storage medium,
a characteristic point extracting function to extract the characteristic point in the first image and the characteristic point in the second image when a pattern formed by the detected edge pixels and their neighboring pixels is similar to a prescribed object to be extracted,
an arrangement pattern data creating function to create the arrangement pattern data which indicates the arrangement pattern based on the extracted characteristic point in the first image, and
a characteristic region defining function to reference the thus created arrangement pattern data and define as the characteristic region the region in which the characteristic point in the second image approximately coincides with the arrangement pattern.
